# EUROPÄISCHE PATENTSCHRIFT

(11) **EP 4 016 918 B1**
(45) Veröffentlichungstag und Bekanntmachung des Hinweises auf die Patenterteilung: **29.01.2025**
(21) Anmeldenummer: 21212698.1
(22) Anmeldetag: 07.12.2021
(51) Int. Cl.: H04L 9/08

(54) **VERFAHREN ZUR INITIALEN VERTEILUNG VON SCHÜTZENSWERTEN DATEN IN EINEM ETCS-ZUGSICHERUNGSSYSTEM**
METHOD FOR INITIAL DISTRIBUTION OF PROTECTED DATA IN AN ETCS TRAIN CONTROL SYSTEM
PROCÉDÉ DE DISTRIBUTION INITIALE DES DONNÉES DE PROTECTION DANS UN SYSTÈME DE PROTECTION DES TRAINS ETCS

(30) Priorität: 18.12.2020 DE 102020216277
(43) Veröffentlichungstag der Anmeldung: 22.06.2022
(73) Patentinhaber: Siemens Mobility GmbH, 81739 München (DE)
(72) Erfinder: Dägele, Elmar, 13467 Berlin (DE); Stein, Fabrice, 15859 Storkow (DE)
(74) Vertreter: Siemens Patent Attorneys

(56) Entgegenhaltungen:
- WO-A1-2009/027380
- DE-T2- 3 889 561
- AN: "On-line Key Management FFFIS", 17 December 2015 (2015-12-17), XP055915264, Retrieved from the Internet <URL:https://www.era.europa.eu/sites/default/files/filesystem/ertms/ccs_tsi_annex_a_-_mandatory_specifications/set_of_specifications_3_etcs_b3_r2_gsm-r_b1/index083_-_subset-137_v100.pdf> [retrieved on 20220425]

## Beschreibung

Die Erfindung betrifft ein Verfahren zur initialen Verteilung von schützenswerten Daten, wie zum Beispiel wenigstens einem Schlüssel, einem Zertifikat oder einem Passwort, in einem ETCS-Zugsicherungssystem zwischen wenigstens einer Datenzentrale und wenigstens einer ETCS-Einrichtung, wie beispielsweise einer fahrzeugseitigen On-Board Unit - OBU oder einem streckenseitigen Radio Block Center - RBC. Ferner betrifft die Erfindung auch ein entsprechendes ETCS-Zugsicherungssystem.

Im standardisierten europäischen Zugsicherungssystem (European Train Control System - ETCS) werden für die gesicherte Kommunikation zwischen den Zügen mit ihren ETCS-Fahrzeuggeräten (On-Board Unit - OBU) und den streckenseitigen ETCS-Zentralen oder Streckenzentralen (Radio Block Center - RBC) geheime kryptographische Schlüssel verwendet. Für jede dieser Kommunikationsbeziehungen zwischen einer fahrzeugseitigen On-Board Unit und einem streckenseitigen Radio Block Center wird in jeder On-Board Unit und in jedem Radio Block Center je ein Kommunikationsschlüssel (KMAC) abgelegt, aus denen für die Dauer einer Datenverbindung ein geheimer Sitzungsschlüssel abgeleitet wird.

Für die Erzeugung und Verteilung der geheimen kryptographischen Schlüssel (KMAC) in einer sicheren Umgebung der eisenbahntechnischen Anlage ist eine Datenzentrale (KMC) zuständig, die auch als Schlüsselverteilzentrale bezeichnet wird. Die Verteilung der geheimen Schlüssel (KMAC) an die ETCS-Einrichtungen, wie beispielsweise der On-Board Unit und dem Radio Block Center, kann sowohl online als auch offline erfolgen. Eine Offline-Verteilung kann beispielsweise per Datenträgeraustausch erfolgen und für eine Online-Übertragung kann beispielsweise eine Mobilfunkverbindung genutzt werden.

Genaue Details hierzu, wie beispielsweise zugehörige Schnittstellen und Prozesse werden von einem normativen Regelwerk einheitlich vorgegeben, das in Europa durch die UNISIG einheitlich vorgegeben ist, insbesondere UNISIG SUBSETS 114 und 137 beziehen sich hierauf. Die UNISIG ist ein Konsortium von Industrieunternehmen, welche die technischen Spezifikationen von ETCS entwickeln.

Bei der Offline Schlüsselverteilung werden zusätzliche geheime Transportschlüssel (KTRANS) verwendet, um die Geheimhaltung der kryptographischen Schlüssel sicherzustellen, mit den geheimen Transportschlüsseln (KTRANS) werden die geheimen Schlüssel (KMAC) für den Transportweg in die ETCS-Einheiten verschlüsselt. Die Transportschlüssel werden von der Datenzentrale (KMC) erzeugt und ausgegeben. Die Geheimhaltung der Transportschlüssel (KTRANS) ist ebenso sicherheitskritisch wie auch die Geheimhaltung der Schlüssel (KMAC). Somit müssen zuerst die Transportschlüssel (KTRANS) in den ETCS-Einheiten hinterlegt werden, damit danach die Offline-Schlüsselverteilung möglich ist.

Bei der Online-Schlüsselverteilung werden hingegen Root/Client-Zertifikate und Passphrase verwendet, um die geheimen kryptographischen Schlüssel sicher zu übermitteln. Auch diese Zertifikate und Passworte müssen geheim gehalten und ihre Authentizität garantiert werden und sie müssen auf sichere Weise in die ETCS-Einrichtungen eingebracht werden, um danach die Online-Schlüsselverteilung zu starten.

Ein Verfahren zum ETCS-Online-Schlüsselmanagement ist beispielsweise aus der WO 2009/027380 A1 bekannt.

Um die ETCS-Einrichtungen für die vorgegebene ETCS-Schlüsselverteilung offline oder online durchführen zu können, ist also ein Verfahren zur Initialverteilung von schützenswerten Daten, insbesondere Schlüsseln, nötig. Ein solches Verfahren gemäß dem Stand der Technik besteht beispielsweise darin, dass das Einbringen der geheimen Transportschlüssel (KTRANS) nur durch besonders vertrauenswürdige Personen des Bahnbetreibers durchgeführt werden darf. Diese vertrauenswürdigen Personen werden auch als Keymanager bezeichnet. Dabei werden an alle Geräte, Medien und Abläufe zum Transport, Speicherung und Verarbeitung der ungeschützten Schlüssel besonders hohe Sicherheitsanforderungen gestellt. Beispielsweise muss ein spezieller Computer eingeführt werden, der ausschließlich durch den Keymanager bedient wird. Dieser Computer muss speziell gegen Cyberattacken gesichert sein, wodurch seine Konnektivität erheblich eingeschränkt ist. Weiterhin werden beispielsweise für alle Datenträger und Computer mit ungeschützten Schlüsselmaterial spezielle Verwaltungs- und Aufbewahrungsanforderungen gestellt, um den Betrieb des ETCS-Zugsicherungssystems nicht durch Schlüsselkompromittierung, d.h. einer Gefährdung der geheimen Schlüssel, zu gefährden.

Problematisch bei dem oben beschriebenen Verfahren mit Keymanagern ist allerdings, dass insbesondere bei Bahnbetreibern mit größeren Fahrzeugflotten ein erheblicher technischer und organisatorischer Aufwand entstehen kann, der auch personelle Engpässe mit sich führen kann. Beispielsweise muss bei der Tätigkeit des Keymanagers sichergestellt sein, dass keine anderen Personen zur gleichen Zeit an der betroffenen ETCS-Einrichtung anwesend sind. Der Aufwand erhöht sich weiterhin, wenn beispielsweise Hardware oder Software in den ETCS-Einrichtungen getauscht werden muss, wie beispielsweise nach Hardware-Ausfällen oder bei Software Updates. Es gibt daher Bedarf für vereinfachte oder alternative Verfahren und Systeme zur initialen Verteilung von schützenswerten Daten in dem ETCS-Zugsicherungssystem.

Der Erfindung liegt somit die Aufgabe zugrunde, ein Verfahren und ein Zugsicherungssystem der eingangs genannten Art bereitzustellen, die weniger aufwändig und damit verbessert sind.

Erfindungsgemäß wird die Aufgabe gelöst durch das Verfahren gemäß Patentanspruch 1 und das ETCS-Zugsicherungssystem gemäß Patentanspruch 11.

Insbesondere wird die Aufgabe bei dem erfindungsgemäßen Verfahren dadurch gelöst, dass schützenswerte für die wenigstens eine ETCS-Einrichtung bestimmte Daten in einer sicheren Umgebung in der Datenzentrale erzeugt werden, mit den schützenswerten Daten wenigstens ein für die wenigstens eine ETCS-Einrichtung bestimmtes Transportpaket in einer sicheren Umgebung erzeugt wird, das Transportpaket in der sicheren Umgebung gesichert wird, das gesicherte Transportpaket an die ETCS-Einrichtung übermittelt wird, das gesicherte Transportpaket in einem sicheren Bereich der ETCS-Einrichtung entsichert wird und die schützenswerten Daten in dem sicheren Bereich der ETCS-Einrichtung abgelegt werden. Die Sicherung kann beispielsweise in einer Verschlüsselung und/oder einer digitalen Signierung bestehen. Die Entsicherung kann beispielsweise aus einer Entschlüsselung und/oder einer Prüfung der Authentizität anhand einer digitalen Signatur bestehen.

Weiterhin betrifft die erfindungsgemäße Lösung ein ETCS-Zugsicherungssystem zur initialen Verteilung von schützenswerten Daten, wie z.B. wenigstens einem Schlüssel, einem Zertifikat oder einem Passwort, zwischen wenigstens einer Datenzentrale und wenigstens einer ETCS-Einrichtung, wie beispielsweise einer fahrzeugseitigen On-Board Unit - OBU oder einem streckenseitigen Radio Block Center - RBC, mit der wenigstens einen Datenzentrale, die in einer sicheren Umgebung und zur Erzeugung der schützenswerten Daten ausgebildet ist, mit wenigstens einer Datenverteilzentrale, die ebenfalls in einer sicheren Umgebung und zur Erzeugung und Sicherung von wenigstens einem Transportpaket mit den schützenswerten Daten ausgebildet ist, und mit der wenigstens einen ETCS-Einrichtung, die wenigstens einen sicheren Bereich aufweist und zur Entsicherung des verschlüsselten Transportpakets und zum Ablegen der schützenswerten Daten in dem sicheren Bereich ausgebildet ist.

Erfindungsgemäß werden die schützenswerten für die wenigstens eine ETCS-Einrichtung bestimmten Daten in einer sicheren Umgebung in der Datenzentrale erzeugt. Die Datenzentrale, die aus dem Stand der Technik als Schlüsselverteilzentrale (KMC) bereits bekannt ist, kann beispielsweise in einer sicheren Büroumgebung auf einem Computer ausgebildet sein. Dies ist wichtig, weil in dieser ersten Phase des erfindungsgemäßen Verfahrens die schützenswerten Daten noch ungeschützt sind. Die Erzeugung der schützenswerten Daten kann beispielsweise durch eine vertrauenswürdige Person wie den Keymanager geschehen.

Die schützenswerten Daten können in diesem Zusammenhang beispielsweise vertrauliche Daten oder auch nicht vertrauliche Daten sein, deren Integrität aber sichergestellt sein muss, wie z.B. Zertifikate. Die initiale Verteilung der schützenswerten Daten kann zusätzlich auch eine Aktualisierung beinhalten.

Im nächsten Schritt des erfindungsgemäßen Verfahrens wird ein für die ETCS-Einrichtung bestimmtes Transportpaket erzeugt, in dem die schützenswerten Daten enthalten sind. Hierbei wird das Transportpaket speziell für die ETCS-Einrichtung erzeugt. Selbstverständlich werden im Betrieb mehrere Transportpakete für jeweils die unterschiedlichen ETCS-Einrichtungen erzeugt.

Anschließend wird gemäß dem erfindungsgemäßen Verfahren das Transportpaket in der sicheren Umgebung gesichert, z.B. verschlüsselt oder signiert. Hier kann beispielsweise eine kryptographische Verschlüsselung und/oder eine digitale Signatur verwendet werden.

Im nächsten Schritt wird das gesicherte Transportpaket an die betreffende ETCS-Einrichtung übermittelt. Dies kann in bekannter Weise entweder online oder offline erfolgen. Vorteilhaft ist hierbei, dass die schützenswerten Daten nun geschützt sind, d.h. sie können offline beispielsweise von beliebigen Personen übermittelt werden oder online über beliebige auch "unsichere" Wege, wie beispielsweise Mobilfunk, WLAN, 5G oder das Internet. Die schützenswerten Daten sind im Transportpaket gegen unautorisierten Zugriff gesichert.

Im letzten Schritt des erfindungsgemäßen Verfahrens wird das gesicherte Transportpaket in einem sicheren Bereich der ETCS-Einrichtung entsichert und die schützenswerten Daten in dem sicheren Bereich der ETCS-Einrichtung abgelegt. Der sichere Bereich der ETCS-Einrichtung ist eine geschützte Ablage, in der die schützenswerten Daten wie beispielsweise ungeschützte ETCS-Schlüssel gespeichert werden können. Dieser sichere Bereich ist beispielsweise eine spezielle Hardware, wie beispielsweise ein Trusted Plattform Module (TPM)-Chip, und ggf. eine speziellen Applikation in Form einer Firmware, die den Zugriff auf die Daten und deren Verarbeitung steuert. Häufig können dabei die geheimen Schlüssel zur Sicherung nur abgespeichert, aber nicht ausgelesen werden. Das heißt, dass diese nur in dem sicheren Bereich angewendet werden können. Im Betrieb können dabei Nutzdaten an diese spezielle Hardware übergeben werden und anschließend unter Nutzung der abgelegten geheimen Schlüssel verschlüsselt und/oder entschlüsselt und/oder elektronisch signiert und/oder geprüft werden. In dem sicheren Bereich der ETCS-Einrichtung wird beispielsweise für die Offline-Schlüsselverteilung der Transportschlüssel (KTRANS) geschützt abgelegt. Für die Online-Schlüsselverteilung werden beispielsweise mindestens das Client-Zertifikat und die Passphrase geschützt abgelegt.

Die Sicherung des Transportpakets erfolgt beispielsweise mit einem Schlüssel (KP_{ENC}), während zusätzlich für eine Signatur des Transportpakets ein weiterer Schlüssel (KP_{SIG}) angewendet wird. Mit dem privaten Schlüssel (KP_{SIG}) wird eine digitale Signatur des Transportpakets erzeugt, die im Transportpaket an die ETCS-Einrichtung gesendet werden kann. Die Signatur ist in diesem Fall ebenfalls ein Bestandteil des Pakets, weil die Sicherstellung der Authentizität ebenso hohe Priorität besitzen kann wie die Geheimhaltung der Schlüssel. Der nötige Schlüssel oder die nötigen Schlüssel zur Verschlüsselung und/oder Signierung des Transportpakets sind erfindungsgemäß in der Datenzentrale bzw. Datenverteilzentrale und der ETCS-Einrichtung hinterlegt.

Nach der Generierung der verschlüsselten und signierten Transportpakete in der Datenverteilzentrale erfolgt der Transport zu der ETCS-Einrichtung. Dafür können die üblichen ungeschützten Wege benutzt werden, beispielsweise manueller Transport per Datenträger oder die Übermittlung per E-Mail.

Beim Empfang des Transportpakets in der ETCS-Einrichtung wird in diesem Beispiel die Authentizität des Pakets anhand der mitgelieferten Signatur mit dem öffentlichen Schlüssel (KP_{SIG}) verifiziert. Mit dem privaten Schlüssel (KP_{ENC}) wird das Transportpaket nach erfolgreicher Authentifizierung entschlüsselt. Die im Transportpaket enthaltenen Daten, die beispielsweise Schlüsselanfragen enthalten, werden in der ETCS-Einrichtung reihenfolgerichtig verarbeitet und beispielsweise der Schlüsselspeicher wird aktualisiert. Für jede verarbeitete Schlüsselanfrage kann die ETCS-Einrichtung eine Quittungsnachricht (KMC-Notification) erzeugen, deren Inhalt und Format auch im UNISIG-Standard definiert ist und die ohne Veränderung an die Datenzentrale zurückgeliefert wird.

In der ETCS-Einrichtung erfolgt das Einlesen des Transportpakets beispielsweise mit Hilfe eines Servicecomputers. Die Prüfung und Entschlüsselung des Transportpakets erfolgten nur im sicheren Bereich der ETCS-Einrichtung, so dass zu keiner Zeit ungesicherte schützenswerte Daten außerhalb des sicheren Bereichs der ETCS-Einrichtung existieren. Der sichere Bereich innerhalb der ETCS-Einrichtung kann beispielsweise durch eine spezielle Hardwarebaugruppe oder eine geeignete Chipkarte gebildet werden. Nach erfolgreicher Prüfung des Transportpakets wird sein Inhalt übernommen und weiterverarbeitet.

Um die erfindungsgemäße Sicherung und Entsicherung des Transportpakets zu ermöglichen sind zusätzliche Werkzeuge, wie z.B. Schlüssel und/oder Zertifikate, in der Datenverteilzentrale und der ETCS-Einrichtung bereits vorhanden. Bei privaten Schlüsseln wird außerdem deren Vertraulichkeit dauerhaft sichergestellt. Da sich die Datenverteilzentrale erfindungsgemäß in einer sicheren Umgebung befindet, besteht hier keine neue Sicherheitsanforderung. Auch in den bekannten ETCS-Einrichtungen sind sichere Bereiche vorhanden, so dass der zusätzliche Aufwand gering ist.

Das erfindungsgemäße Verfahren und das erfindungsgemäße Zugsicherungssystem haben den Vorteil, dass die Verteilung des geschützten Transportpakets an die ETCS-Einrichtungen vereinfacht ist. Statt eines Keymanagers kann die Übermittlung durch andere Personen oder technische Hilfsmittel ohne erhöhte Security Anforderungen erfolgen. Beispielsweise kann dies durch das Wartungspersonal eines Zuges erfolgen, die da die Schlüsselinstallation vornehmen können. Das Transportpaket kann auch über Mobilfunk an die ETCS-Einrichtungen übertragen werden. Dadurch kann die Schlüsselverteilung vollständig automatisiert erfolgen, so dass vor Ort kein Personal mehr für die Schlüsselinstallation erforderlich ist. Statt vieler Einzeltransaktionen können mehrere Schlüsselanfragen und weitere schützenswerte Daten in einem Transportpaket gemeinsam in die ETCS-Einrichtung eingebracht werden. Auch die anschließenden Benachrichtigungen für durchgeführte Schlüsselanfragen in den ETCS-Einrichtungen können automatisch nacheinander generiert und abgespeichert werden. Damit verringert sich der Zeitbedarf für das Schlüsselmanagement und die Erstinbetriebnahme insgesamt in den ETCS-Einrichtungen deutlich.

Erfindungsgemäß werden in dem Transportpaket eine Vielzahl von schützenswerten Daten übermittelt, umfassend mehrere Schlüssel, Zertifikate Passwörter und/oder Schlüsselanfragen. Dies hat den Vorteil, dass sich durch die Zusammenfassung der schützenswerten Daten in dem Transportpaket der Arbeitsaufwand und die Anzahl der zu verschickenden Transportpakete deutlich reduziert. Das Transportpaket kann neben dem zuvor bereits genannten Transportschlüssel (KTRANS) und dem Kommunikationsschlüssel (KMAC) auch weitere herstellerspezifische ETCS-Schlüssel enthalten. So können beispielsweise Personalisierungsschlüssel (KPERS) oder Softwaresiegel (SEAL) ebenfalls als Bestandteile in das Transportpaket integriert werden, wodurch sich die Effizienz des erfindungsgemäßen Verfahrens weiter steigert. Weiterhin können auch Schlüsselupdates in das Transportpaket aufgenommen werden. In diesem Fall werden die neuen Schlüssel nach erfolgreicher Prüfung des Transportpakets in der ETCS-Einrichtung ausgewechselt, beispielsweise nach einem festgelegten Zyklus. Neben den Schlüsseln für das Offline-Schlüsselmanagement kann das Transportpaket selbstverständlich ebenfalls für die Verteilung der schützenswerten Daten für das Onlineschlüsselmanagement verwendet werden. Das kann beispielsweise die für das Onlineschlüsselmanagement (OKM) üblicherweise verwendeten Root/Client-Zertifikate und Passphrase sein. Die Installation und Verarbeitung dieser Daten findet analog zu den Daten des Offlineschlüsselmanagements in der ETCS-Einrichtung statt. Weiterhin können neben den schützenswerten Schlüsseldaten im Transportpaket weitere zur Inbetriebsetzung der ETCS-Einrichtung notwendigen Parameter hinterlegt werden, wie beispielsweise die ETCS-ID der ETCS-Einrichtung und die entsprechende ETCS-ID der Datenzentrale. Bei der Verarbeitung des Transportpakets in der ETCS-Einrichtung werden sämtliche im Transportpaket hinterlegten Parameter automatisch und in der korrekten Reihenfolge in die ETCS-Einrichtung eingebracht.

Das erfindungsgemäße Verfahren kann durch vorteilhafte Ausgestaltung weiterentwickelt werden, wie im Folgenden beschrieben ist.

In einer vorteilhaften Ausgestaltung kann zum Entsichern zumindest eines Transportpakets in der ETCS-Einrichtung wenigstens ein Werkzeug, wie z.B. ein Schlüssel oder ein Zertifikat, verwendet werden, das bei der Herstellung der ETCS-Einrichtung unverlierbar eingeprägt wurde. Dies hat den Vorteil, dass das für das Entsichern des Transportpakets in der ETCS-Einrichtung nötige Werkzeug bei der Herstellung der ETCS-Einrichtung besonders einfach hinterlegt werden kann und dadurch kein manuelles Hinterlegen dieses Werkzeugs in der eisenbahntechnischen Anlage nötig ist. Insbesondere beim ersten empfangenen Transportpaket kann dies von Vorteil sein. Danach kann ein Update des Werkzeugs erfolgen.

Um ein möglichst hochwertiges Sicherndes Transportpakets zu garantieren, kann für die Sicherung des Transportpakets eine symmetrische oder asymmetrische kryptographische Verschlüsselung oder auch eine Kombination dieser Verfahren verwendet werden. Beispielsweise kann ein asymmetrisches Kryptoverfahren mit öffentlichen und privaten Schlüsseln angewendet werden. Integrität und Vertraulichkeit der schützenswerten Daten werden dabei durch die kryptographische Verschlüsselung sichergestellt, während für den Schutz der Authentizität die digitale Signatur erzeugt und geprüft wird. Weiterhin kann auch eine hybride Verschlüsselung verwendet werden, die zusätzlich AES (Advanced Encryption Standard) verwendet. Der AES-Schlüssel wiederum ist dabei mit einem öffentlichen Schlüssel verschlüsselt und im Datenpaket abgelegt. Unter AES versteht man einen fortgeschrittenen Verschlüsselungsstandard, der ein symmetrisches Verschlüsselungsverfahren umfasst.

Um die zu übertragenden Daten zu reduzieren, insbesondere für die Onlineübertragung, kann das Transportpaket vor dem Übermitteln komprimiert und nach dem Übermitteln expandiert werden.

Ferner kann das Transportpaket in der ETCS-Einrichtung entschlüsselt werden, wenn der Zeitpunkt der Entsicherung in eine vorgegebene Zeit fällt und/oder ein vorgegebenes Passwort eingegeben wurde. Dies hat den Vorteil, dass eine zusätzliche Sicherheit implementiert ist. Dadurch ist die zulässige Zeitspanne für die Verarbeitung des Transportpakets in der ETCS-Einrichtung eingeschränkt, d.h. nach Ablauf oder vor Beginn der Gültigkeit wird das Einlesen und die Verarbeitung in der ETCS-Einrichtung blockiert. Durch das nötige vorgegebene Passwort kann der Personenkreis eingeschränkt werden, der die Verarbeitung des Transportpakets in der ETCS-Einrichtung starten kann. Hier wird davon ausgegangen, dass das vorgegebene Passwort nur an einen eingeschränkten Personenkreis ausgegeben wird. Alternativ oder zusätzlich können weitere Einschränkungen bei der Verarbeitung des Transportpakets getroffen werden: Beispielsweise können die Funktionen eingeschränkt werden, so dass zum Beispiel das Entsiegeln der Software in der ETCS-Einrichtung gesperrt sein, während das Versiegeln der Software freigegeben ist. Ferner kann das Transportpaket zur gegebenen Zeit zur zeitlich begrenzten Freischaltung bestimmter Funktionalitäten verwendet werden, wie zum Beispiel, um das Löschen aller Schlüssel in der ETCS-Einrichtung zu erlauben. Derartige Konfigurationsvorgaben können beispielsweise bei der Generierung des Transportpakets mittels einer XML-Datei im Transportpaket integriert werden. Anschließend werden in der ETCS-Einrichtung diese mitgelieferten Konfigurationsvorgaben bei der Verarbeitung des Transportpakets ausgewertet und angewendet.

Um die Verarbeitung der schützenswerten Daten besonders sicher zu machen, kann die Erzeugung des Transportpakets von einer vertrauenswürdigen Person initiiert werden. Um den gleichen Vorteil zu erreichen, kann auch die Erzeugung der schützenswerten Daten durch eine vertrauenswürdige Person initiiert werden. Eine solche vertrauenswürdige Person kann beispielsweise der eingangs beschriebene Keymanager sein. Da die Erzeugung des Transportpakets und/oder die Erzeugung der schützenswerten Daten zentral beispielsweise in einer vertrauenswürdigen Büroumgebung stattfinden kann, ist der Aufwand für den Keymanager lediglich gering.

Die Erfindung betrifft auch ein computerimplementiertes Verfahren, das nach einer zuvor genannten Ausführungsform ausgebildet ist.

Weiterhin betrifft die Erfindung auch eine Vorrichtung zur Datenverarbeitung, die erfindungsgemäß zur Durchführung des Verfahrens nach einer der oben genannten Ausführungsformen ausgestaltet ist.

In einer vorteilhaften Ausgestaltung des erfindungsgemäßen ETCS-Zugsicherungssystems können die Datenzentrale und die Datenverteilzentrale in der gleichen sicheren Umgebung, insbesondere auf einem Computer ausgebildet sein. Dies hat den Vorteil, dass weniger Hardware benötigt wird und zu keinem Zeitpunkt ungeschützte schützenswerte Daten außerhalb der gleichen sicheren Umgebung verwendet werden. Ferner kann die Datenzentrale auch die Datenverteilzentrale ausbilden.

Im Folgenden wird die Erfindung mit Bezug auf die Zeichnungen und den darin dargestellten beispielhaften Ausführungsformen erläutert.

Es zeigen:
- Figur 1: eine schematische Darstellung einer eisenbahntechnischen Anlage mit einer beispielhaften Ausführungsform eines erfindungsgemäßen ETCS-Zugsicherungssystems;
- Figur 2: eine schematische Darstellung des erfindungsgemäßen ETCS-Zugsicherungssystems aus Fig. 1;
- Figur 3: eine weitere schematische Darstellung des erfindungsgemäßen ETCS-Zugsicherungssystems aus den Figuren 1 und 2.

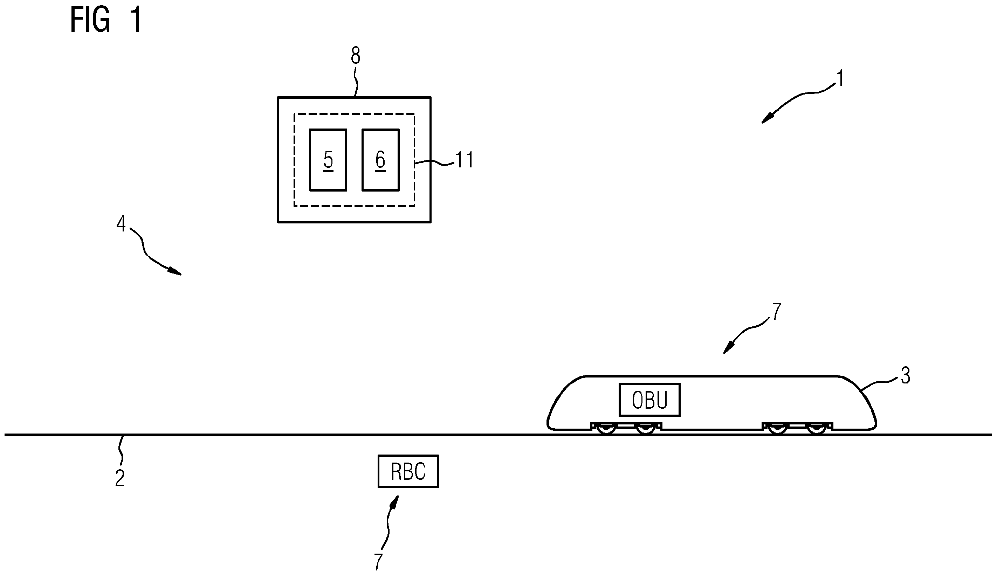

Im Folgenden wird die Erfindung mit Bezug auf die beispielhafte Ausführungsformen in den Figuren 1 bis 3 erläutert.

Eine in Fig. 1 dargestellte eisenbahntechnische Anlage 1 weist ein entlang einer Fahrstrecke 2 fahrendes Fahrzeug 3 und ein erfindungsgemäßes ETCS-Zugsicherungssystem 4 auf. Das ETCS-Zugsicherungssystem 4 umfasst eine Steuerungszentrale 8 mit einer Datenzentrale 5 und einer Datenverteilzentrale 6 sowie mehreren ETCS-Einrichtungen 7. Auch wenn dies in Fig. 1 anders dargestellt ist, können die Datenzentrale 5 (KMC) und Datenverteilzentrale 6 (KDC) räumlich weit getrennt voneinander sein und ggf. von unterschiedlichen Gebäuden und/oder Unternehmen betrieben werden.

Die ETCS-Einrichtungen sind bei der Ausführungsform in den Figuren 1-3 beispielsweise als ein Radio Block Center RBC, das auch als ETCS-Streckenzentrale bezeichnet werden könnte, und als fahrzeugseitige On-Board Unit OBU, die auch als Fahrzeugsteuergerät bezeichnet werden kann, ausgebildet. Das Radio Block Center RBC ist entlang der Fahrstrecke 2 angeordnet und die On-Board Unit OBU ist fahrzeugseitig im Fahrzeug 3 angeordnet. Der Einfachheit halber ist in Fig. 1 lediglich ein Fahrzeug 3 und ein Radio Block Center RBC dargestellt.

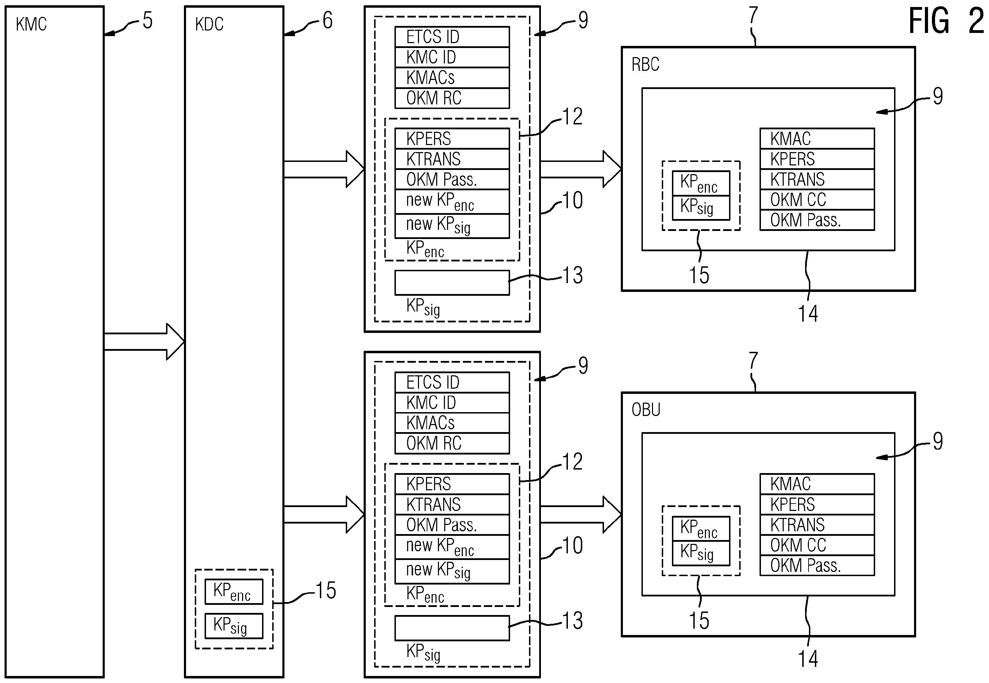

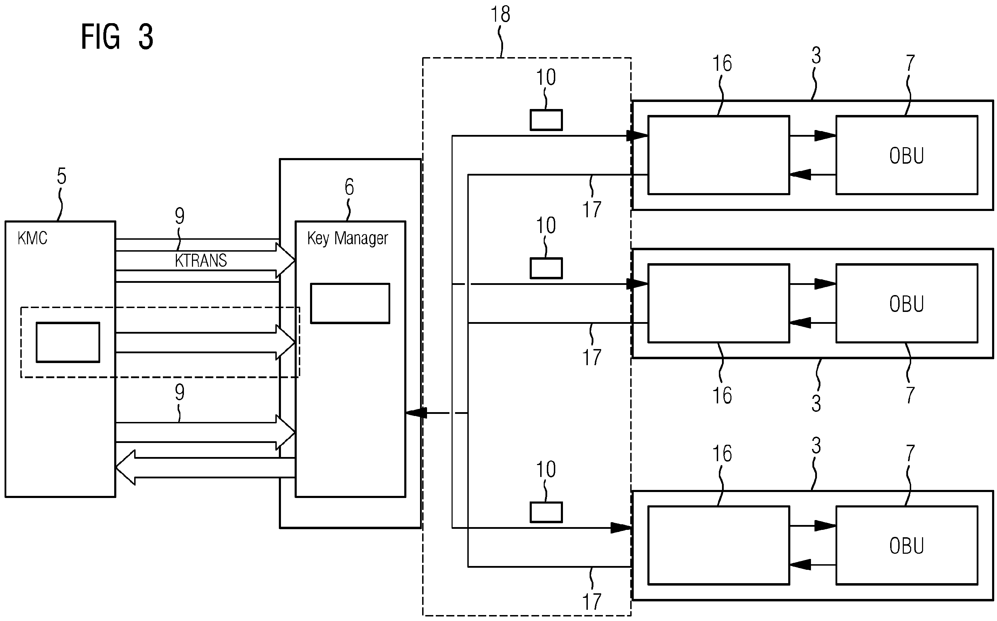

Die Steuerzentrale 8 ist irgendwo entfernt zu den ETCS-Einrichtungen 7 beispielsweise in einer Büroumgebung ausgebildet. Im Betrieb der eisenbahntechnischen Anlage 1, die für ETCS ausgebildet ist, werden für die Kommunikation zwischen der On-Board Unit OBU im Fahrzeug 3 und dem Radio Block Center RBC Kommunikationsschlüssel verwendet, die in den ETCS-Einrichtungen 7 abgelegt sind. Diese geheimen Kommunikationsschlüssel und auch nötige Transportschlüssel KTRANS müssen initial auf sichere Weise in den ETCS-Einrichtungen abgelegt werden. Dies geschieht durch das erfindungsgemäße Verfahren und wird im Folgenden insbesondere mit Bezug auf die Figuren 2 und 3 erläutert.

In der Datenzentrale 5, die in den Figuren zusätzlich als KMC - Key Management Center bezeichnet ist, werden zunächst schützenswerte Daten 9 erzeugt. Diese schützenswerten oder vertraulichen Daten sind Kommunikationsschlüssel KMAC, Transportschlüssel KTRANS, Root-Zertifikate OKM und eine OKM Passphrase. Diese schützenswerten Daten 9 werden nach ihrer Erzeugung an die Datenverteilzentrale 6 weitergegeben.

Die Datenverteilzentrale 6 wird in den Figuren zusätzlich auch als KDC - Key Distribution Center bezeichnet. In der Datenverteilzentrale 6 wird erfindungsgemäß für jede ETCS-Einrichtung 7 ein individuelles Transportpaket 10 erzeugt und gesichert.

Die Datenverteilzentrale 6 ist ebenso wie die Datenzentrale 5 in einer sicheren Umgebung ausgebildet, so dass die schützenswerten Daten hier ungeschützt bearbeitet werden können, ohne dass ein Risiko besteht. Die sicherere Umgebung 11 ist in Fig. 1 schematisch dargestellt. Bei der beispielhaften Ausführungsform in den Figuren wird ein Teil der schützenswerten Daten 9 verschlüsselt. Diese verschlüsselten Daten 12 sind mit einer gestrichelten Linie eingerahmt dargestellt. Bei der beispielhaften Ausführungsform in den Figuren werden diese verschlüsselten Daten 12 mit einem Schlüssel KP_{ENC} verschlüsselt.

Jedes Transportpaket mit sämtlichen schützenswerten Daten 9 wird in dem Transportpaket 10 mit dem Schlüssel KP_{SIG} signiert und dadurch gesichert. Das Transportpaket ist somit zur Sicherung signiert, aber nicht komplett verschlüsselt. Alle vertraulichen Daten sind im Transportpaket 10 verschlüsselt. Die nicht vertraulichen Daten sind nicht verschlüsselt, sondern signiert, um gegen unautorisierte Verfälschung geschützt zu werden. KP_{ENC} und KP_{SIG} sind Teil eines asymmetrischen Kryptoverfahrens, wie z.B. RSA. KP_{ENC} und KP_{SIG} werden im Folgenden auch als Transportpaketschlüssel 15 bezeichnet.

In der Datenverteilzentrale 6 wird für jede ETCS-Einrichtung ein individuelles Transportpaket 10 erstellt. Beispielhaft ist dies in Fig. 2 dargestellt, in der das obere Transportpaket 10 für das Radio Block Center RBC erstellt ist und das untere Transportpaket 10 für die On-Board Unit OBU. Die Transportpakete 10 umfassen bei der beispielhaften Ausführungsform in den Figuren zusätzliche Konfigurationsvorgaben 13, die die weitere Verarbeitung der schützenswerten Daten 9 in den ETCS-Einrichtungen 7 vorgibt. Dies kann beispielsweise die Gültigkeit des jeweiligen Transportpakets 10 betreffen. So kann das Transportpaket 10 in der ETCS-Einrichtung 7 beispielsweise nur entschlüsselt werden, wenn der Zeitpunkt der Entschlüsselung in eine vorgegebene Zeit fällt. Alternativ oder zusätzlich kann der Personenkreis beschränkt werden durch die Vergabe eines Passwortes. Dadurch kann das Transportpaket 10 in der ETCS-Einrichtung nur entschlüsselt werden, wenn ein vorgegebenes Passwort eingegeben wurde, das nur dem Personenkreis bekannt ist. Weiterhin sind zusätzliche Einschränkungen oder Freigaben von Funktionen als Konfigurationsvorgaben möglich: Beispielsweise kann die Verarbeitung des Transportpakets 10 in der ETCS-Einrichtung 7 nur für freigegebene Funktionen erfolgen oder zum Beispiel ist das Entsiegeln der Software der ETCS-Einrichtung 7 gesperrt, während das Versiegeln der Software freigegeben ist. Alternativ kann das Transportpaket 7 gegebenenfalls auch zeitlich begrenzt für eine Freischaltung bestimmter Funktionalitäten verwendet werden, wie z.B. um das Löschen der Schlüssel in der ETCS-Einrichtung zu erlauben.

Die gesicherten Transportpakete 10 werden im nächsten Schritt des erfindungsgemäßen Verfahrens von der Datenverteilzentrale 6 an die jeweiligen ETCS-Einrichtungen 7 übermittelt. Dies kann auf verschiedene Arten geschehen, wie aus dem Stand der Technik bekannt, beispielsweise per Online-Übermittlung, per Email oder Datenverbindung. Auch eine offline-Übermittlung ist selbstverständlich möglich, beispielsweise über einen Datenträger, der von einer Person überbracht wird.

Die ETCS-Einrichtungen 7 weisen jeweils einen sicheren Bereich 14 auf, in dem das jeweils empfangene Transportpaket 10 entschlüsselt wird. Dafür werden als Werkzeuge erneut die Schlüssel des Transportpakets KP_{ENC} und KP_{SIG} verwendet. Diese Transportpaketschlüssel 15 sind sowohl in der Datenverteilzentrale 6 als auch in den jeweiligen ETCS-Einrichtungen vorhanden. Dabei hat jede ETCS-Einrichtung 7 einen individuellen Transportpaketschlüssel bzw. individuelle Transportpaketschlüssel 15. Bei der beispielhaften Ausführungsform in den Figuren sind die Transportpaketschlüssel 15 bereits während der Hardwareproduktion in den sicheren Bereich 14 der ETCS-Einrichtung 7 durch den Hersteller eingebracht worden. Dies kann beispielsweise durch ein Imprinting-Verfahren geschehen. Die Transportpaketschlüssel 15 können nach Inbetriebnahme der jeweiligen ETCS-Einrichtung 7 zwar aktualisiert und ausgewechselt werden, aber durch das ursprüngliche Einbringen durch den Hersteller in der Hardwareproduktion ist sichergestellt, dass immer bereits ein Transportpaketschlüssel 15 auf der jeweiligen ETCS-Einrichtung 7 vorhanden ist.

In der schematischen Darstellung in Fig. 3 ist zusätzlich zu der Darstellung in Fig. 2 auch ein Datenfluss von der Datenzentrale 5 über die Datenverteilzentrale 6 zu den ETCS-Einrichtungen 7 und zurück durch Pfeile dargestellt. Bei der beispielhaften Darstellung in Fig. 3 sind anders als in der Darstellung in Fig. 2 drei unterschiedliche On-Board Units OBU dargestellt, dafür aber kein Radio Block Center RBC. Der Datenfluss zum Radio Block Center RBC geschieht aber in gleicher oder vergleichbarer Weise wie bei den On-Board Units OBU. Die drei On-Board Units OBU sind beispielsweise in drei unterschiedlichen Fahrzeugen 3 angeordnet, die beispielsweise in einem Depot auf unterschiedlichen Depotplätzen abgestellt sind.

Der in Fig. 3 dargestellte Datenfluss beginnt bei der Datenzentrale 5, die die schützenswerten Daten 9 erzeugt und beispielsweise mit sogenannten Schlüsselaufträgen an die Datenverteilzentrale 6 übermittelt. Da in der beispielhaften Ausführungsform in den Figuren sowohl die Datenzentrale 5 als auch die Datenverteilzentrale 6 in einer sicheren Umgebung ausgebildet sind, muss keine besondere Sicherheitsmaßnahme für die Übermittlung der schützenswerten Daten 9 erfolgen. Alternativ können beide auch räumlich getrennt sein, und beispielsweise von verschiedenen Betreibern verwaltet werden. In diesem Fall müssten diese sich auf ein sicheres Übertragungsverfahren zwischen Datenzentrale 5 und Datenverteilzentrale 6 einigen.

In der Datenverteilzentrale 6 werden wie oben bereits beschrieben die Transportpakete 10 erzeugt und gesichert und an die jeweiligen ETCS-Einrichtungen 7 übermittelt.

Optional kann im Fahrzeug eine helfende Person 16 anwesend sein, die beispielsweise per offline-Datenübermittlung die jeweiligen Transportpakete 10 den ETCS-Einrichtungen 7 zuführt. Diese helfende Person 16 hat aber zu keinem Zeitpunkt Zugriff auf die schützenswerten Daten, so dass sie weniger vertrauenswürdig sein muss als der Keymanager. Die helfende Person 16 kann z.B. das Wartungspersonal sein.

Als Antwort bzw. Bestätigung senden die ETCS-Einrichtungen 7 jeweils Antworten 17 über die Datenverteilzentrale 6 oder direkt zur Datenzentrale 5 zurück.

Optional können die Transportpakete 10 auch von der Datenzentrale 5 erstellt und übermittelt werden, die dadurch die Aufgaben der Datenverteilzentrale 6 mit übernimmt und diese ausbildet. Diese optionale Ausführung ist in Figur 3 durch den gestrichelten Kasten zwischen Datenzentrale 5 und Datenverteilzentrale 6 angedeutet.

Die Übermittlung der Transportpakete 10 zwischen der Datenverteilzentrale 6 und den ETCS-Einrichtungen 7 und die der Antworten 17 in die entgegengesetzte Richtung können über jeden beliebigen Datenkanal 18 erfolgen.

## Patentansprüche

1. Verfahren zur initialen Verteilung von schützenswerten Daten (9), wie z.B. wenigstens einem Schlüssel, einem Zertifikat oder einem Passwort, in einem ETCS-Zugsicherungssystem (4) zwischen wenigstens einer Datenzentrale (5) und wenigstens einer ETCS-Einrichtung (7), wie beispielsweise einer fahrzeugseitigen On-Board Unit - OBU oder einem streckenseitigen Radio Block Center - RBC,
bei dem schützenswerte für die wenigstens eine ETCS-Einrichtung (7) bestimmte Daten in einer sicheren Umgebung (11) in der Datenzentrale (5) erzeugt werden,
bei dem mit den schützenswerten Daten (9) wenigstens ein für die wenigstens eine ETCS-Einrichtung (7) bestimmtes Transportpaket (10) in einer sicheren Umgebung (11) erzeugt wird, bei dem das Transportpaket (10) in der sicheren Umgebung (11) gesichert wird,
bei dem das gesicherte Transportpaket (10) an die ETCS-Einrichtung (7) übermittelt wird,
bei dem das gesicherte Transportpaket (10) in einem sicheren Bereich (14) der ETCS-Einrichtung (7) entsichert wird und die schützenswerten Daten (9) in dem sicheren Bereich (14) der ETCS-Einrichtung (7) abgelegt werden, wobei
in dem Transportpaket (10) eine Vielzahl von schützenswerten Daten (9) übermittelt werden, umfassend mehrere Schlüssel, Zertifikate, Passwörter und/oder Schlüsselanfragen.

2. Verfahren nach Anspruch 1,
**dadurch gekennzeichnet, dass**
zum Entsichern zumindest eines Transportpakets (10) in der ETCS-Einrichtung (7) wenigstens ein Werkzeug verwendet wird, das bei der Herstellung der ETCS-Einrichtung (7) unverlierbar eingeprägt wurde.

3. Verfahren nach einem der oben genannten Ansprüche,
**dadurch gekennzeichnet, dass**
für die Sicherung des Transportpakets (10) eine symmetrische oder asymmetrische kryptographische Verschlüsselung oder eine Kombination beider Verfahren verwendet wird.

4. Verfahren nach einem der oben genannten Ansprüche,
**dadurch gekennzeichnet, dass**
das Transportpaket (10) vor dem Übermitteln komprimiert und nach dem Übermitteln expandiert wird.

5. Verfahren nach einem der oben genannten Ansprüche,
**dadurch gekennzeichnet, dass**
das Transportpaket (10) in der ETCS-Einrichtung (7) nur entsichert wird, wenn der Zeitpunkt der Entsicherung in eine vorgegebene Zeit fällt und/oder ein vorgegebenes Passwort eingegeben wurde.

6. Verfahren nach einem der oben genannten Ansprüche,
**dadurch gekennzeichnet, dass**
die Erzeugung des Transportpakets (10) von einem Keymanager als einer vertrauenswürdigen Person initiiert wird.

7. Verfahren nach einem der oben genannten Ansprüche,
**dadurch gekennzeichnet, dass**
die Erzeugung der Daten (9) durch einen Keymanager als eine vertrauenswürdige Person initiiert wird.

8. Computerimplementiertes Verfahren,
**dadurch gekennzeichnet, dass**
das Verfahren nach einem der oben genannten Ansprüche ausgebildet ist.

9. Vorrichtung zur Datenverarbeitung,
**dadurch gekennzeichnet, dass**
die Vorrichtung zur Durchführung des Verfahrens nach einem der oben genannten Ansprüche ausgestaltet ist.

10. ETCS-Zugsicherungssystem (4) zur initialen Verteilung von schützenswerten Daten (9), wie z.B. wenigstens einem Schlüssel, einem Zertifikat oder einem Passwort, zwischen wenigstens einer Datenzentrale (5) und wenigstens einer ETCS-Einrichtung, wie beispielsweise einer fahrzeugseitigen On-Board Unit - OBU oder einem streckenseitigen Radio Block Center - RBC, wobei das ETCS-Zugsicherungssystem (4) Folgendes umfasst:
die wenigstens eine Datenzentrale (5), die in einer sicheren Umgebung (11) und zur Erzeugung der schützenswerten Daten (9) ausgebildet ist,
wenigstens eine Datenverteilzentrale (6), die ebenfalls in einer sicheren Umgebung und zur Erzeugung und Sicherung von wenigstens einem Transportpaket (10) mit den schützenswerten Daten (9) ausgebildet ist,
und die wenigstens eine ETCS-Einrichtung, die wenigstens einen sicheren Bereich (14) aufweist und zur Entsicherung des gesicherten Transportpakets (10) und zum Ablegen der schützenswerten Daten (9) in dem sicheren Bereich (14) ausgebildet ist,
wobei in dem Transportpaket (10) eine Vielzahl von schützenswerten Daten (9) übermittelt werden, umfassend mehrere Schlüssel, Zertifikate, Passwörter und/oder Schlüsselanfragen.

11. ETCS-Zugsicherungssystem (4) nach Anspruch 10,
**dadurch gekennzeichnet, dass**
die Datenzentrale (5) und die Datenverteilzentrale (6) in der gleichen sicheren Umgebung (11) ausgebildet sind.

12. ETCS-Zugsicherungssystem (4) nach Anspruch 10,
**dadurch gekennzeichnet, dass**
die Datenzentrale (5) und die Datenverteilzentrale (6) auf einem Computer ausgebildet sind.

13. ETCS-Zugsicherungssystem (4) nach Anspruch 10, 11 oder 12,
**dadurch gekennzeichnet, dass**
die Datenzentrale (5) die Datenverteilzentrale (6) ausbildet.

## Claims

1. Method for initial distribution of protected data (9), such as e.g. at least a key, a certificate or a password, in an ETCS train control system (4) between at least one data control centre (5) and at least one ETCS facility (7), such as, for instance, a vehicle-side on-board unit, OBU, or a track-side radio block centre, RBC,
in which protected data specific to the at least one ETCS facility (7) is generated in a secure environment (11) in the data control centre (5),
in which with the protected data (9), at least one transport package (10) specific to the at least one ETCS facility (7) is generated in a secure environment (11) in which the transport package (10) is secured in the secure environment (11),
in which the secured transport package (10) is transmitted to the ETCS facility (7),
in which the secure transport package (10) is unlocked in a secure area (14) of the ETCS facility (7) and the protected data (9) is stored in the secure area (14) of the ETCS facility (7), wherein
a plurality of protected data (9) comprising a number of keys, certificates, passwords and/or key queries is transmitted in the transport package (10).

2. Method according to claim 1,
**characterised in that**
in order to unlock at least one transport package (10) in the ETCS facility (7), at least one tool is used, which was impressed in a non-volatile manner during production of the ETCS facility (7).

3. Method according to one of the afore-cited claims, **characterised in that**
a symmetrical or asymmetrical cryptographic encryption or a combination of both methods is used for securing the transport package (10).

4. Method according to one of the afore-cited claims, **characterised in that**
the transport package (10) is compressed before transmission and expanded after transmission.

5. Method according to one of the afore-cited claims, **characterised in that**
the transport package (10) is only unlocked in the ETCS facility (7) if the point in time of unlocking occurs in a predetermined time and/or a predetermined password has been entered.

6. Method according to one of the afore-cited claims, **characterised in that**
the generation of the transport package (10) is initiated by a key manager as a trustworthy person.

7. Method according to one of the afore-cited claims, **characterised in that**
the generation of the data (9) is initiated by a key manager as a trustworthy person.

8. Computer-implemented method,
**characterised in that**
the method is embodied according to one of the afore-cited claims.

9. Device for data transmission,
**characterised in that**
the device is designed to carry out the method according to one of the afore-cited claims.

10. ETCS train control system (4) for initial distribution of protected data (9), such as e.g. at least a key, a certificate or a password, between at least one data control centre (5) and at least one ETCS facility, such as, for instance, a vehicle-side on-board unit, OBU, or a track-side radio block centre, RBC, wherein the ETCS train control system (4) comprises the following:
the at least one data control centre (5), which is embodied in a secure environment (11) and for generating the protected data (9),
at least one data distribution centre (6), which is likewise embodied in a secure environment and for generating and securing at least one transport package (10) with the protected data (9),
and the at least one ETCS facility, which has at least one secure area (14), and is embodied to unlock the secured transport package (10) and to store the protected data (9) in the secure area (14),
wherein a plurality of protected data (9) comprising a number of keys, certificates, passwords and/or key queries is transmitted in the transport package (10).

11. ETCS train control system (4) according to claim 10, **characterised in that**
the data control centre (5) and the data distribution centre (6) are embodied in the same secure environment (11).

12. ETCS train control system (4) according to claim 10, **characterised in that**
the data control centre (5) and the data distribution centre (6) are embodied on a computer.

13. ETCS train control system (4) according to claim 10, 11 or 12,
**characterised in that**
the data control centre (5) embodies the data distribution centre (6).

## Revendications

1. Procédé de répartition initiale de données (9) à valeur de protection, comme par exemple au moins une clé, un certificat ou un mot de passe, dans un système (4) de protection des trains ETCS entre au moins une centrale (5) de données et au moins un dispositif (7) ETCS, comme par exemple une on-board unit - OBU embarquée ou un radio block center - RBC sur la voie,
dans lequel on produit des données à valeur de protection destinées au au moins un dispositif (7) ETCS dans un environnement (11) sécurisé dans la centrale (5) de données,
dans lequel, par les données (9) à valeur de protection, on produit dans un environnement (11) sécurisé au moins un paquet (10) de transport destiné au au moins un dispositif (7) ETCS, dans lequel on sécurise le paquet (10) de transport dans l'environnement (11) sécurisé,
dans lequel on transmet le paquet (10) de transport sécurisé au dispositif (7) ETCS,
dans lequel on désécurise le paquet (10) de transport sécurisé dans une partie (14) sécurisée du dispositif (7) ETCS et on met les données (9) à valeur de protection dans la partie (14) sécurisée du dispositif (7) ETCS, dans lequel
on transmet dans le paquet (10) de transport une pluralité de données (9) à valeur de protection, comprenant plusieurs clés, certificats, mots de passe et/ou demandes de clés.

2. Procédé suivant la revendication 1,
**caractérisé en ce que**
pour désécuriser au moins un paquet (10) de transport dans le dispositif (7) ETCS, on utilise au moins un outil, qui a été mis de manière imperdable lors de la fabrication du dispositif (7) ETCS.

3. Procédé suivant l'une des revendications mentionnées ci-dessus,
**caractérisé en ce que**
pour sécuriser le paquet (10) de transport, on utilise un chiffrement cryptographique symétrique ou dissymétrique ou une combinaison des deux procédés.

4. Procédé suivant l'une des revendications mentionnées ci-dessus,
**caractérisé en ce que** l'
on comprime le paquet (10) de transport avant la transmission et on l'expanse après la transmission.

5. Procédé suivant l'une des revendications mentionnées ci-dessus,
**caractérisé en ce que** l'
on ne désécurise le paquet (10) de transport dans le dispositif (7) ETCS, que si l'instant de la désécurisation tombe dans un temps donné à l'avance et/ou il a été donné un mot de passe donné à l'avance.

6. Procédé suivant l'une des revendications mentionnées ci-dessus,
**caractérisé en ce que** l'
on lance la production du paquet (10) de transport par un gestionnaire de clé comme personne digne de confiance.

7. Procédé suivant l'une des revendications mentionnées ci-dessus,
**caractérisé en ce que** l'
on lance la production des données (9) par un gestionnaire de clé comme personne digne de confiance.

8. Procédé mis en œuvre par ordinateur,
**caractérisé en ce que** le procédé est constitué suivant l'une des revendications mentionnées ci-dessus.

9. Système de traitement de données,
**caractérisé en ce que** le système est conformé pour effectuer le procédé suivant l'une des revendications mentionnées ci-dessus.

10. Système (4) de protection des trains ETCS pour la répartition initiale de données (9) à valeur de protection, comme par exemple au moins une clé, un certificat ou un mot de passe, entre au moins une centrale (5) de données et au moins un dispositif ETCS, comme par exemple une on-board unit - OBU embarquée ou un radio block center - RBC sur la voie, dans lequel le système (4) de protection des trains ETCS comprend ce qui suit :
la au moins une centrale (5) de données, qui est constituée dans un environnement (11) sécurisé et pour la production des données (9) à valeur de protection,
au moins une centrale (6) de répartition de données, qui est constituée également dans un environnement sécurisé et pour la production et la sécurisation d'au moins un paquet (10) de transport par les données (9) à valeur de protection,
et le au moins un dispositif ETCS, qui a au moins une partie (14) sécurisée et qui est constitué pour la désécurisation du paquet (10) de transport sécurisé et pour la mise des données (9) à valeur de protection dans la partie (14) sécurisée,
dans lequel on transmet dans le paquet (10) de transport une pluralité de données (9) à valeur de protection, comprenant plusieurs clés, certificats, mots de passe et/ou demandes de clés.

11. Système (4) de protection des trains ETCS suivant la revendication 10,
**caractérisé en ce que**
la centrale (5) de données et la centrale (6) de répartition de données sont formées dans le même environnement (11) sécurisé.

12. Système (4) de protection des trains ETCS suivant la revendication 10,
**caractérisé en ce que**
la centrale (5) de données et la centrale (6) de répartition de données sont formées sur un ordinateur.

13. Système (4) de protection des trains ETCS suivant la revendication 10, 11 ou 12,
**caractérisé en ce que** la centrale (5) de données forme la centrale (6) de répartition de données.
